(19) Europäisches Patentamt
European Patent Office
Office européen des brevets

(11) **EP 2 135 146 B1**

(12) **EUROPÄISCHE PATENTSCHRIFT**

(45) Veröffentlichungstag und Bekanntmachung des Hinweises auf die Patenterteilung:
**26.09.2012 Patentblatt 2012/39**

(21) Anmeldenummer: **08707590.9**

(22) Anmeldetag: **07.02.2008**

(51) Int Cl.:
*G01C 21/00* (2006.01)   *G05D 1/04* (2006.01)
*G01S 5/18* (2006.01)   *G01S 15/02* (2006.01)
*G01C 9/00* (2006.01)

(86) Internationale Anmeldenummer:
**PCT/EP2008/000929**

(87) Internationale Veröffentlichungsnummer:
**WO 2008/113432 (25.09.2008 Gazette 2008/39)**

(54) **VERFAHREN ZUR NAVIGATION EINES UNTERWASSERFAHRZEUGS**

METHOD FOR NAVIGATING AN UNDERSEA VEHICLE

PROCÉDÉ DE NAVIGATION POUR UN VÉHICULE SOUS-MARIN

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.03.2007 DE 102007012911**

(43) Veröffentlichungstag der Anmeldung:
**23.12.2009 Patentblatt 2009/52**

(73) Patentinhaber: **ATLAS Elektronik GmbH**
**28309 Bremen (DE)**

(72) Erfinder:
• **RATHJEN, Dirk**
**28357 Bremen (DE)**
• **SCHMIEGEL, Armin**
**22609 Hamburg (DE)**
• **ENGEL, Robert**
**28207 Bremen (DE)**

(74) Vertreter: **Wasiljeff, Johannes M.B.**
**Jabbusch Siekmann & Wasiljeff**
**Patentanwälte**
**Otto-Lilienthal-Strasse 25**
**28199 Bremen (DE)**

(56) Entgegenhaltungen:
**US-B2- 7 173 880**

• URA T ET AL: "On-site INS update of an AUV r2D4 by SSBL based position estimation" 9. November 2004 (2004-11-09), OCEANS '04. MTTS/IEEE TECHNO-OCEAN '04 KOBE, JAPAN NOV. 9-12, 2004, PISCATAWAY, NJ, USA,IEEE, PAGE(S) 1606 - 1611 , XP010776702 ISBN: 978-0-7803-8669-3 Seite 1606, rechte Spalte, Absatz 1 - Seite 1607, linke Spalte, Absatz 1; Abbildung 1 Seite 1607, rechte Spalte, Absatz 1; Abbildung 3
• GARAU B ET AL: "AUV navigation through turbulent ocean environments supported by onboard H-ADCP" 15. Mai 2006 (2006-05-15), ROBOTICS AND AUTOMATION, 2006. ICRA 2006. PROCEEDINGS 2006 IEEE INTERN ATIONAL CONFERENCE ON ORLANDO, FL, USA MAY 15-19, 2006, PISCATAWAY, NJ, USA,IEEE, PAGE (S) 3556 - 3561 , XP010921807 ISBN: 978-0-7803-9505-3 Zusammenfassung Seite 3556, rechte Spalte, letzte Zeile - Seite 3557, linke Spalte, Zeile 11
• ODEGAARD O T: "Application potential, error considerations and post-processing software for ADCP deployments on AUVs" 9. November 2004 (2004-11-09), OCEANS '04. MTTS/IEEE TECHNO-OCEAN '04 KOBE, JAPAN NOV. 9-12, 2004, PISCATAWAY, NJ, USA,IEEE, PAGE(S) 1435 - 1443 , XP010776628 ISBN: 978-0-7803-8669-3 Zusammenfassung Seite 1438, linke Spalte, Absätze 2,3

**Beschreibung**

Die Erfindung betrifft ein Verfahren zur Navigation eines Unterwasserfahrzeugs nach dem Oberbegriff des Anspruchs 1.

Bei der Navigation von Wasserfahrzeugen geht es um die Bestimmung des vom Wasserfahrzeug zurückgelegten Weges über Grund, so dass jederzeit dessen Position in geographischer Länge und Breite bekannt ist.

Bekannte Navigationssysteme für Unterwasserfahrzeuge weisen im allgemeinen eine Inertialmesseinrichtung auf, die die Messung von Drehraten und Beschleunigungen ermöglicht. Da hiermit nur für sehr kurze Zeiträume eine präzise Navigation möglich ist, wird immer eine Stützung durch zusätzliche Sensoren benötigt. Für Unterwasserfahrzeuge sind dies hauptsächlich GPS bei aufgetauchtem Unterwasserfahrzeug, Drucksensoren, Dopplerlogs und akustische Tracksysteme. Solche integrierte Navigationssysteme sind z.B. beschrieben in Titterton, T. H., Weston, J. L.: "strapdown inertial navigation technology"; Peter Peregrinus, London 1997, Chapter 12.

In tiefen Meeresgebieten, in denen das Dopplerlog aufgrund seiner Reichweite nicht gegen Grund, sondern nur gegen das umgebende Wasser misst, kann bei bekannter Wasserströmung aus der vom Dopplerlog gemessenen, sog. relativen Fahrzeuggeschwindigkeit auf die Fahrzeuggeschwindigkeit über Grund geschlossen werden. Die erforderlichen Werte für die Wasserströmung werden sog. Strömungskarten entnommen, die für viel befahrene Seegebiete erstellt worden sind. Für die Navigation werden sog. Navigationsfilter eingesetzt, in denen die Ausgangsgrößen der Sensoren, wie Inertialmesseinrichtung und Dopplerlog, sowie die für die jeweiligen Seegebiete ausgewiesenen Werte der Wasserströmung eingegeben werden und die für die Fahrzeugnavigation mehr oder weniger genaue Werte der absoluten Fahrzeuggeschwindigkeit über Grund, der momentanen Position und der Ausrichtung oder Lage des Wasserfahrzeugs liefern. Die Einbeziehung des a priori-Wissens über die Strömung im Seegebiet in das Navigationsfilter ist beispielsweise beschrieben in: N. Vasquez, M. J. Rendas "Using a priori Current Knowlege on AUV-Navigation", IEEE 1998,0-7803-5045-6/98.

Die Veröffentlichung "On-site INS Update of an AUV r2D4 by SSBL based Position Estimation" von Tamaki Ura et al (9. November 2004 in OCEANS 04. MTTS/IEEE Technoocean '04 Kobe, Japan Nov. 9-12, 2004, Piscataway, NJ, USA, IEEE, pages 1606 to 1611, XP010776702, ISBN: 978-0-7803-8669-3) beschreibt ein Navigationsverfahren für Unterwasserfahrzeuge, bei dem vom Navigationsfilter eines Trägheits-Navigationssystems gelieferte Positions-, Lage- und Geschwindigkeitsdaten mit Hilfe der Messwerte eines Dopplerlogs korrigiert werden. Der Einfluß der Wasserströmung auf die Navigationsdaten insbesondere während der Ab- und Auftauchphase wird durch SSBL- (Super Short Base Line) -Positionsmessungen ausgeglichen.

Bei Unterwasserfahrzeugen tritt insbesondere bei der Ab- und Auftauchphase das Problem auf, dass mit dem üblicherweise in Verbindung mit einem Inertialnavigationssystem eingesetzten Dopplerlog bei großer Wassertiefe eine Stützung des Inertialnavigationssystems durch Geschwindigkeitsmessungen gegen Grund nicht möglich ist. Vielmehr arbeitet das Dopplerlog dann im sog. Watertrack, misst also die Fahrzeuggeschwindigkeit gegen das umgebende Wasser. Da sich das Unterwasserfahrzeug mit der Wasserströmung, die relativ zur Geschwindigkeit des Unterwasserfahrzeugs beträchtlich sein kann, mitbewegt, werden Wasserströmungen bei der Geschwindigkeitsmessung nicht erfasst. Während einerseits das Inertialnavigationssystem seine Beschleunigungswerte in Bezug auf ein Inertialsystem misst, misst das Dopplerlog im Bezug auf die das Unterwasserfahrzeug umgebende Strömung also in einem möglicherweise beschleunigten Bezugssystem. Folglich detektiert das durch Wasser messende Dopplerlog beim Durchtauchen eines Strömungsgradienten keine Beschleunigung. Dies führt zu inkonsistenten Messungen und damit potentiell zu Instabilitäten im Navigationsfilter. Ein a priori-Wissen über die Wasserströmungen liegt im allgemeinen nicht vor, da AUVs im wesentlichen zur Erkundung in der Wassertiefe eingesetzt werden, und keine verlässlichen Angaben über die in unterschiedlichen Meerestiefen herrschenden Strömungen zur Verfügung stehen.

Der Erfindung liegt die Aufgabe zugrunde, ein Verfahren zur Navigation eines Unterwasserfahrzeugs so zu verbessern, dass die vom Unterwasserfahrzeug tatsächlich zurückgelegte Wegstrecke sehr präzise bestimmt wird.

Die Aufgabe ist erfindungsgemäß durch die Merkmale im Anspruch 1 gelöst.

Das erfindungsgemäße Verfahren hat den Vorteil, dass mittels des vorhandenen Dopplerlogs nicht nur die relative Fahrzeuggeschwindigkeit gegen das umgebende Wasser gemessen, sondern auch die aktuelle Wasserströmung im Einsatzgebiet des Unterwasserfahrzeugs während der Missionsfahrt fortlaufend bestimmt wird. Damit wird in kurzen Abständen ein fortlaufend aktualisiertes Strömungsprofil für das vom Unterwasserfahrzeug befahrene Wassergebiet erstellt. Aus der gemessenen relativen Fahrzeuggeschwindigkeit des Dopplerlogs und aus dem dem fortlaufend aktualisierten Strömungsprofil entnommenen Strömungswert für den momentanen Ort des Unterwasserfahrzeugs ergibt sich die absolute Fahrzeuggeschwindigkeit, die einen zuverlässigen Stützwert für das Inertialnavigationssystem liefert. Damit erhält man aus dem Navigationsfilter insbesondere für den Ab- und Auftauchvorgang des Unterwasserfahrzeugs deutlich verbesserte Positionswerte des Unterwasserfahrzeugs.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Die Erfindung ist anhand eines in der Zeichnung dargestellten Ausführungsbeispiels im folgenden näher beschrieben. Es zeigen:

Fig. 1 eine Skizze eines vertikalen Schnitts eines fiktiv in horizontale Raumschichten mit fester Schichtdicke unterteilten, von einem abtauchenden Unterwasserfahrzeug befahrenen Wassergebiets und des Messbereichs eines am Unterwasserfahrzeug angeordneten Dopplerlogs, der in in Messrichtung aneinanderliegende Messzellen unterteilt ist,

Fig. 2 eine verkleinerte Draufsicht der letzten Messzelle in Richtung Pfeil II in Fig. 1,

Fig. 3 ein Blockschaltbild zur Illustration des Navigationsverfahrens während des Abtauchvorgangs des Unterwasserfahrzeugs,

Fig. 4 eine Skizze einer perspektivischen Darstellung des ausschnittweise fiktiv in Raumzellen mit konstanten Abmessungen unterteilten Wassergebiets und des in Messzellen unterteilten Messbereichs des Dopplerlogs.

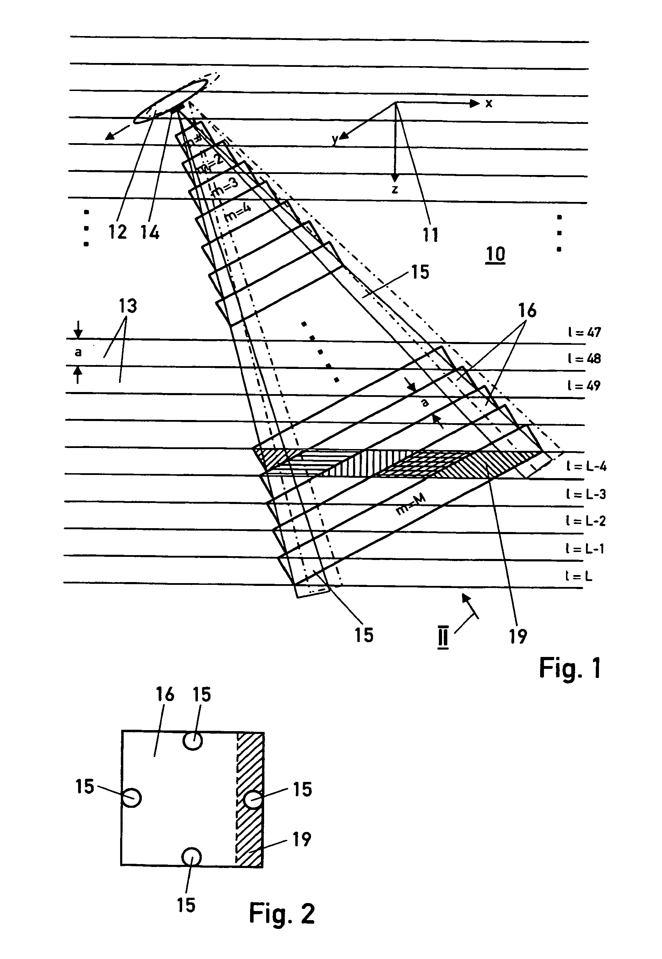

In Fig. 1 ist ausschnittweise ein Wassergebiet 10 im Vertikalschnitt, also in einer in der z/x-Ebene eines mit seiner z-Achse vertikal ausgerichteten Koordinatensystems 11 liegenden Schnittebene, dargestellt, in dem ein schematisch skizziertes Unterwasserfahrzeug 12 in Richtung Wassergrund abtaucht. Das Wassergebiet 10 ist fiktiv in Bereiche unterteil, die mindestens eine in z-Achse des Koordinatensystems 11 endliche Abmessung aufweisen. Im Ausführungsbeispiel der Fig. 1 sind als Bereiche vertikal übereinanderliegende Raumschichten 13 mit vorzugsweise gleicher Schichtdicke d gewählt. Die Raumschichten 13 sind mit 1=1,2,...L, ausgehend von der Wasseroberfläche bis hin zum Wassergrund, durchnummeriert. Das Unterwasserfahrzeug 12 ist mit einem Dopplerlog 14 ausgestattet. Aufbau und Wirkungsweise eines Dopplerlogs sind bekannt und beispielsweise in der DE 29 01 293 beschrieben. Das Dopplerlog misst mit vier in verschiedenen Richtungen orientierten Schallkeulen 15, die gegenüber der Längsachse des Unterwasserfahrzeugs 12 in schiffvoraus und achtern und gegenüber der Fahrzeugquerachse in steuer- und backbord nach unten geneigt sind, die relative Fahrzeuggeschwindigkeit nach Betrag und Richtung. In Fig. 1 sind von den Schallkeulen 15 nur zwei zu sehen. Die vier Schallkeulen 15 begrenzen einen Messbereich des Dopplerlogs 14, der in Fig. 1 schematisiert dargestellt ist. Dieser Messbereich ist in Messzellen 16 unterteilt, die in Messrichtung gesehen aneinanderliegen und vorzugsweise die gleiche Zellentiefe a aufweisen. Eine Draufsicht einer Messzelle 16 mit den die Messzelle 16 seitlich begrenzenden Schallkeulen 15 ist in Fig. 2 dargestellt. Ein von der Sendeeinrichtung des Dopplerlogs 14 ausgesendeter Schallimpuls wird im Wasser in jeder Messzelle 16 gestreut, und der gestreute, dopplerverschobene Schallimpuls wird in der Empfangseinrichtung des Dopplerlogs 14 empfangen. Anhand der Laufzeit des Schallimpulses kann dessen Zuordnung zu jeder Messzelle 16 bestimmt und aus der Dopplerverschiebung die Fahrzeuggeschwindigkeit gegen das Wasservolumen in jeder Messzelle 16 berechnet werden. Die Messzellen 16 sind mit m=1, 2,...M durchnummeriert. Jeder vom Dopplerlog 14 ausgesendete und empfangene Schallimpuls löst einen Messvorgang für die Fahrzeuggeschwindigkeiten in den Messzellen 16 aus. Die Messvorgänge werden mit n=1, 2,...N durchnummeriert.

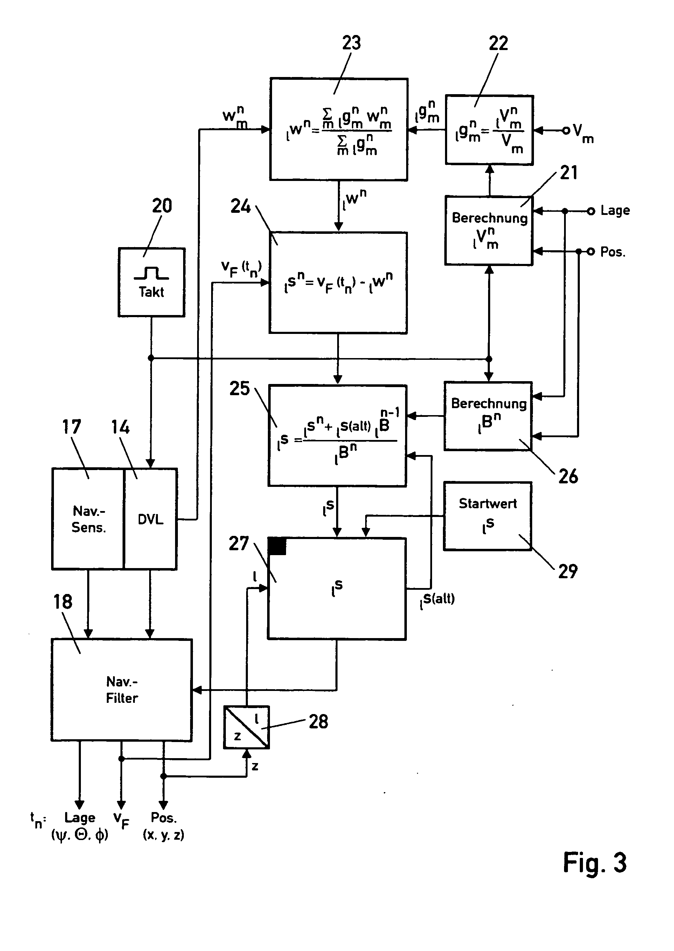

Das Unterwasserfahrzeug 12 verfügt über Navigationssensoren 17, z. B. eine Inertialmesseinrichtung, und ein Navigationsfilter 18, das aus den Messdaten der Navigationssensoren 17 in bestimmten Zeitabständen Navigationsdaten liefert. Solche Navigationsdaten sind: Position, absolute Fahrzeuggeschwindigkeit und Lage bzw. Ausrichtung des Unterwasserfahrzeugs 12, die durch den Heading-Winkel $\psi$, den Pitch-Winkel $\Theta$ und den Rollwinkel $\Phi$ definiert ist(Fig. 3). Für eine präzise Berechnung dieser Navigationsdaten auch über längere Zeiträume werden diese mit Messwerten der Fahrzeuggeschwindigkeit aus dem Dopplerlog 14 gestützt. Hierzu wird dem Navigationsfilter 18 die vom Dopplerlog 14 gemessene relative Fahrzeuggeschwindigkeit gegen Wasser und zusätzlich ein a priori-Wissen über die Wasserströmung, also die Wassergeschwindigkeit in der Raumschicht 13, in der sich das Unterwasserfahrzeug 12 momentan befindet, zugeführt. Dieses a priori-Wissen über die Strömungsverhältnisse in den einzelnen Raumschichten 13 des Wassergebiets 10 wird während der Fahrt des Unterwasserfahrzeugs 12, im Ausführungsbeispiel der Fig. 1 während des Tauchvorgangs, in folgender Weise ermittelt:

Mit jedem Aktivierungspuls eines Taktgenerators 20 (Fig. 3) wird in kurzen Zeitabständen, die vorzugsweise kleiner als 1 sek. sind, ein Messvorgang durch Aussenden und Empfangen eines Schallimpulses durch das Dopplerlog 14 ausgelöst. Jeder Messvorgang wird mit einer fortlaufenden Nummer n=1, 2,...N registriert. Bei jedem Messvorgang n wird vom Dopplerlog 14 für jede Messzelle 16 mit der Nummer m=1, 2,...M die relative Fahrzeuggeschwindigkeit $W_m^n$, das ist die Fahrzeuggeschwindigkeit gegenüber dem Wasservolumen in der Messzelle 16, gemessen, die im folgenden messzellenspezifische, relative Fahrzeuggeschwindigkeit $W_m^n$ genannt ist. Die messzellenspezifischen, relativen Fahrzeuggeschwindigkeiten $W_m^n$ aus jedem Messvorgang werden in die als Raumschichten 13 ausgebildete Bereiche des Wassergebiets 10 in Zuordnung zu der jeweiligen Nummer n des Messvorgangs transformiert. Aus jeder durch die Transformation entstandenen, jeweils für eine Raumschicht 13 gültigen, bereichsspezifischen, relativen Fahrzeuggeschwindigkeit $_1w^n$ wird mit Hilfe der vom Navigationsfilter 18 zum Zeitpunkt $t_n$ des Messvorgangs n ausgegebenen, absoluten Fahrzeuggeschwindigkeit $v_F(t_n)$ die Strömung $_1S^n$ in der Raumschicht 13 mit der Nummer 1 für den Messvorgang n berechnet. Aus allen Messvorgängen n, die in der jeweiligen Raumschicht 13 mit der Nummer 1 zur Berechnung einer Strömung $_1s^n$ geführt haben, wird durch Mittelung der berechneten Strömungen $_1s^n$ die für die jeweilige Raumschicht 13 spezifische Strömung $_1s$, im folgenden bereichsspezifische Strömung $_1s$ genannt, abgeleitet und gespeichert. Die für alle Raumschichten 13 abgespeicherten, bereichsspezifischen Strömungen $_1s$ bilden das a priori-Wissen über das Strömungsprofil im Wassergebiet 10. Entsprechend der vom Navigationsfilter 18 ausgegebenen, momentanen Position des Unterwasserfahrzeugs 12 wird aus dem Speicher 27 der jeweilige Strömungswert aufgerufen und dem Navigationsfilter 18 zugeführt, wozu zuvor aus der Position des Unterwasserfahrzeugs 12 die Nummer 1 der Raumschicht 13 bestimmt wird, in der sich das Unterwasserfahrzeug 12 befindet.

Durch eine geeignete Ausrichtung des Dopplerlogs 14 ist sichergestellt, dass das Unterwasserfahrzeug 12 bei seiner Tauchfahrt immer in eine Raumschicht 13 eindringt, zu der zuvor die Strömung $_1s$ in der beschriebenen Weise ermittelt worden ist. Wird die Annahme getroffen, dass innerhalb einer jeden Raumschicht 13 die Strömung konstant ist - was im allgemeinen zutrifft -, so steht, da die Raumschichten 13 in der Schichtebene nicht begrenzt sind, für die Ausrichtung des am Rumpfboden des Unterwasserfahrzeugs 12 angeordneten Dopplerlogs 14 ein großer Winkelbereich zur Verfügung. Bevorzugt wird das Dopplerlog 14 so angeordnet, dass seine Messrichtung in etwa rechtwinklig zur Fahrzeugachse nach unten weist, wie dies in Fig. 3 dargestellt ist. Das hat den Vorteil, dass bei Horizontalfahrten des Unterwasserfahrzeugs 12 in der Tauchtiefe nahe dem Meeresboden das Dopplerlog 14 die absolute Fahrzeuggeschwindigkeit gegen Grund misst und sehr zuverlässige Stützwerte für das Navigationsfilter 18 liefert.

Zur Gewinnung der bereichsspezifischen, relativen Fahrzeuggeschwindigkeiten $_1w^n$ und der bereichsspezifischen Strömungen $_1s$ werden in den in Fig. 3 dargestellten Verarbeitungsblöcken folgende Verfahrensschritte durchgeführt:

Bei der Transformation der vom Dopplerlog 14 gemessenen, messzellenspezifischen, relativen Fahrzeuggeschwindigkeiten $w_m^n$ in eine für eine Raumschicht 13 mit der Nummer 1 bereichsspezifische, relative Fahrzeuggeschwindigkeit $_1w^n$ werden alle benachbarten Messzellen 16 herangezogen, die dieselbe Raumschicht 13 schneiden. Im Ausführungsbeispiel der Fig. 1 wird beispielsweise die Raumschicht 13 mit der Nummer 1=L-4 von den benachbarten Messzellen 16 mit den Nummern m=M, m=M-1, m=M-2, m=M-3 und m=M-4 geschnitten. Damit sind diese Messzellen 16 bestimmend für die zu transformierenden, messzellenspezifischen, relativen Fahrzeuggeschwindigkeiten $w_m^n$ zur Gewinnung der bereichsspezifischen, relativen Fahrzeuggeschwindigkeit $_{L-4}w^n$ in der Raumschicht 13 mit der Nummer 1=L-4. Im Block 21 wird zunächst bei jedem neuen Messvorgang mit der Nummer n=1, 2,...N für jede Messzelle 16 mit der Nummer m=1, 2,...M das Schnittvolumen $_1V_m^n$ von Messzelle 16 und Raumschicht 13 mit der Nummer 1=1, 2,...L berechnet. Das Schnittvolumen ist dabei das Volumen, das die jeweilige Messzelle 16 aus einer Raumschicht 13 ausschneidet bzw. das Volumen, das einer Messzelle 16 und einer Raumschicht 13 gemeinsam ist. Dieses Schnittvolumen ist abhängig von der Gestalt oder Form der Messzelle 16, die bei jeder Messzelle 16 konstant ist, und von der Ausrichtung des Messbereichs des Dopplerlogs 14, also der Messrichtung, die wiederum abhängig ist von der Position und der Lage des Unterwasserfahrzeugs 12. Für jeden Messvorgang n wird aus diesem Schnittvolumen $_1V_m^n$ ein Wichtungsfaktor $_1g_m^n$ abgeleitet. Dieser Wichtungsfaktor $_1g_m^n$ wird im Block 22 gemäß

$$_1g_m^n = \frac{_1V_m^n}{V_m} \tag{1}$$

berechnet. Mit diesen Wichtungsfaktoren wird im Block 23 die Transformation der bei jedem Messvorgang n erhaltenen messzellenspezifischen, relativen Fahrzeuggeschwindigkeiten $w_m^n$ durchgeführt. Zunächst werden die aufgrund der vorhandenen Schnittstellen der Messzellen 16 mit den jeweiligen Raumschichten 13 zur Transformation bestimmten, messzellenspezifischen, relativen Fahrzeuggeschwindigkeiten $w_m^n$ mit dem jeweils zugehörigen Wichtungsfaktor $_1g_m^n$ multipliziert. Dann wird die Summe aller dieser mit dem jeweiligen Wichtungsfaktor multiplizierten, messzellenspezifischen, relativen Fahrzeuggeschwindigkeiten gebildet und durch die Summe der Wichtungsfaktoren dividiert, gemäß

nachstehender Gl. (2)

$$_1 w^n = \frac{\sum\limits_m {_1}g_m^n \cdot w_m^n}{\sum\limits_m {_1}g_m^n} \qquad (2).$$

Zur Verdeutlichung des beschriebenen Transformationsvorgangs sind in Fig. 1 beispielhaft die Schnittvolumina $_1 V_m^n$ aller die Raumschicht 13 mit Nummer 1=L-4 schneidenden Messzellen 16 unterschiedlich schraffiert dargestellt. Dies sind die Messzellen 16 mit den Nummern m=M-4, m=M-3, m=M-2, m=M-1 und m=M. Mit dem Messvorgang n=N wurde beispielhaft in der Messzelle 16 mit m=M-4 die messzellenspezifische, relative Fahrzeuggeschwindigkeit $w_{M-4}^N$ gemessen, ebenso in der Messzelle 16 mit m=M-3 die messzellenspezifische, relative Fahrzeuggeschwindigkeit $w_{M-3}^N$, ebenso in der Messzelle 16 mit m=M-2 die messzellenspezifische, relative Fahrzeuggeschwindigkeit $w_{M-2}^N$, usw.. Beispielhaft ist in Fig. 1 das Schnittvolumen $_{L-4}V_{M-3}^N$ für die Messzelle 16 mit m=M-3 waagerecht schraffiert dargestellt, das Schnittvolumen $_{L-4}V_{M-2}^N$ für die Messzelle 16 mit m=M-2 senkrecht schraffiert dargestellt, usw.. Das in Fig. 1 mit 19 bezeichnete, schraffierte Schnittvolumen $_{L-4}V_M^N$ von Messzelle 16 mit der Nummer m=M und Raumschicht 13 mit der der Nummer 1=L-4, findet sich auch in Fig. 2 und ist dort als schraffierte Fläche 19 ausgewiesen. Die Wichtungsfaktoren $_{L-4}g_{M-4}^N$, $_{L-4}g_{M-3}^N$, ... ergeben sich somit jeweils als Quotient aus den Schnittvolumina $_{L-4}V_{M-4}^N$, $_{L-4}V_{M-3}^N$, ... und den Volumina $V_{M-4}$, $V_{M-3}$, ... der Messzellen 16 mit den Nummern m=M-4, m=M-3, .... Damit ergibt sich nach Gl.(2) die bereichsspezifische, relative Fahrzeuggeschwindigkeit in der Raumschicht 13 mit der Nummer 1=L-4 aus den relativen Fahrzeuggeschwindigkeiten in den Messzellen 16 mit den Nummern m=M-4, m=M-3, m=M-2, m=M-1 und m=M zu

$$_{L-4} w^N = \frac{_{L-4}g_{M-4}^N \cdot w_{M-4}^N + {_{L-4}}g_{M-3}^N \cdot w_{M-3}^N + {_{L-4}}g_{M-2}^N \cdot w_{M-2}^N + {_{L-4}}g_{M-1}^N \cdot w_{M-1}^N + {_{L-4}}g_M^N \cdot w_M^N}{_{L-4}g_{M-4}^N + {_{L-4}}g_{M-3}^N + {_{L-4}}g_{M-2}^N + {_{L-4}}g_{M-1}^N + {_{L-4}}g_M^N} \qquad (3).$$

Im Block 24 wird aus der in vorstehend beschriebenen Weise berechneten, bereichsspezifischen, relativen Fahrzeuggeschwindigkeit $_1 w^n$ und der vom Navigationsfilter 18 zum Zeitpunkt $t_n$ des Messvorgangs mit der Numerierung n=1, 2,...N ausgegebenen absoluten Fahrzeuggeschwindigkeit $v_F(t_n)$ die Strömung $_1 s^n$ für den Messvorgang mit der Nummer n berechnet, indem jeweils die bereichsspezifische, relative Fahrzeuggeschwindigkeit $_1 w^n$ von der absoluten Fahrzeuggeschwindigkeit $v_F(t_n)$ subtrahiert wird gemäß

$$_1 s^n = v_F(t_n) - {_1}w^n \qquad (4).$$

Im Block 25 wird aus den bei jedem Messvorgang n berechneten Strömungen $_1 s^n$ für die Raumschicht 13 mit der Numerierung 1=1, 2,...N die für die Raumschicht 13 mit der Numerierung 1=1, 2,...L gültige, bereichsspezifische Strömung $_1 s$ abgeleitet. Hierzu werden alle für dieselbe Raumschicht 13 in allen Messvorgängen bis einschließlich im aktuellen Messvorgang erhaltenen Strömungen $_1 s^n$ gemittelt, d.h. addiert und durch die Zahl $_1 B^n$ der insgesamt für dieselbe Raumschicht 13 erhaltenen Strömungswerte, einschließlich des aktuell berechneten Strömungswerts, dividiert.

Um die Speicherkapazität zu reduzieren, die für die Speicherung aller für jede der Raumschichten 13 erhaltenen Strömungswerte erforderlich wäre, wird jeweils nur die aktuelle, bereichspezifische Strömung $_1s$ abgespeichert, wobei jeweils die zuvor ermittelte, bereichsspezifische Strömung $_1s$(alt) für dieselbe Raumschicht 13 mit der aktuell ermittelten, bereichspezifischen Strömung $_1s$ überschrieben wird, nachdem die zuvor ermittelte, bereichspezifische Strömung $_1s$ (alt) zur Ermittlung der aktuellen, bereichspezifischen Strömung $_1s$ herangezogen worden ist. Hierzu wird im Block 26 ein Faktor $_1B^n$ berechnet, der die Anzahl der Messvorgänge, gezählt bis zum aktuellen Messvorgang, erfasst, die in der Raumschicht 13 mit der Nummer 1 durchgeführt worden sind und zu einem Strömungswert $_1s^n$ geführt haben. Die Anzahl der in einer Raumschicht 13 erfolgten Messvorgänge ist einerseits abhängig von der Reichweite des Dopplerlogs 14 und andererseits von der momentanen Position und Lage des Unterwasserfahrzeugs 12. Mit diesem Faktor $_1B^n$ wird aus der beim Messvorgang mit der Nummer n berechneten Strömung $_1s^n$ die bereichsspezifische Strömung $_1s$ für die Raumschicht 13 mit der Numerierung 1=1, 2...L gemäß

$$_1s = \frac{_1s^n + _1s(alt) \cdot _1B^{n-1}}{_1B^n} \qquad (5).$$

erhalten. $_1s$(alt) ist dabei die zuvor gemäß Gl.(5) erhaltene, letzte, bereichsspezifische Strömung $_1s$ der Raumschicht 13 mit der Nummer 1, während $_1s^n$ die beim aktuellen Messvorgang mit der Nummer n gemäß Gl.(4) berechnete Strömung für die Raumschicht 13 mit der Nummer 1 ist.

Die in Block 25 ermittelte, bereichsspezifische Strömung $_1s$ wird in den Speicher 27 unter der Nummer 1 der jeweiligen Raumschicht 13 eingeschrieben und mit jedem nächsten Messvorgang für jede Raumschicht 13 aktualisiert. Im Speicher 27 ist damit in Zuordnung zu der in Fig. 1 vorgenommenen Raumschichtunterteilung ein aktuelles Strömungsprofil abgelegt, das hochgenau die Strömungswerte $_1s$ mit 1=1, 2, ...L in den verschiedenen Raumschichten 13 ausweist. Befindet sich das Unterwasserfahrzeug 12 in einer dieser Raumschichten 13, so wird zur Stützung der Navigationsdaten neben der vom Dopplerlog 14 gelieferten relativen Fahrzeuggeschwindigkeit dem Navigationsfilter 18 aus dem Strömungsprofil-Speicher 27 noch derjenige Wert der Wasserströmung angeliefert, die bei der momentanen Position des Unterwasserfahrzeugs 12 auf dieses einwirkt. Hierzu wird aus der vom Navigationsfilter 18 ausgegebenen z-Komponente der Fahrzeugposition im Block 28 die entsprechende Nummer 1 derjenigen Raumschicht 13 berechnet, in die die z-Komponente der Fahrzeugposition fällt. Mit dieser Schichtnummer 1 wird die diesbezügliche Strömung $_1s$ aus dem Speicher 27 ausgelesen und dem Navigationsfilter 18 zugeführt.

Das beschriebene Verfahren der während der Fahrt des Unterwasserfahrzeugs 12 in dessen Vorausrichtung fortlaufenden Bestimmung und Aktualisierung der in den verschiedenen Raumschichten 13 des Wassergebiets 10 auftretenden Strömungen $_1s$ erfordert selbstverständlich Startwerte, die die Startposition des Unterwasserfahrzeugs 12 und die Wasserströmung am Startort angeben. Die Startposition lässt sich bei aufgetauchtem Unterwasserfahrzeug 12 z.B. mittels eines GPS sehr genau bestimmen. Die am Startort gemessene oder geschätzte Wasserströmung wird als erster Wert in den Speicher 27 in Zuordnung zu den Nummern 1 derjenigen Raumschichten 13, die in der Startposition des Unterwasserfahrzeugs 12 von dem Messbereich des Dopplerlogs 14 erfasst werden, eingegeben. Die Speicherplätze im Speicher 27 für die tiefergelegenen Raumschichten 13 werden mit "0" besetzt, so dass im Speicher 27 ein erstes in Raumschichten 13 unterteiltes Strömungsprofil über die Wassertiefe, abgespeichert ist. Diese Startwerte für die bereichsspezifischen Strömungen werden in Fig. 3 vom Block 29 in den Speicher 27 eingelesen.

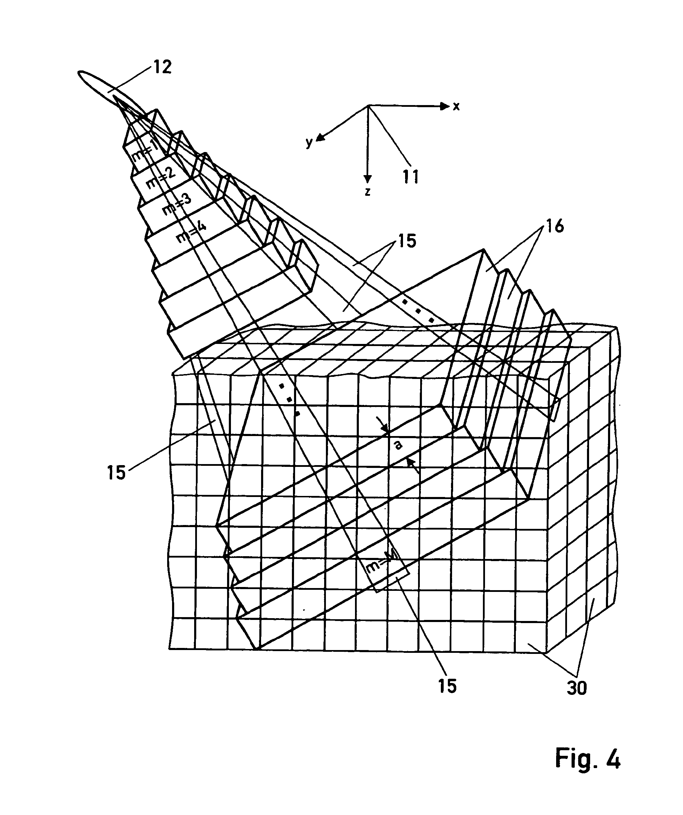

In dem in Fig. 1 dargestellten Beispiel ist vorausgesetzt, dass die Wasserströmung innerhalb einer Raumschicht 13 unabhängig vom Ort ist. Kann diese Voraussetzung nicht getroffen werden, d.h. ist eine ortsabhängige Strömung innerhalb der Raumschichten 13 zu unterstellen, so wird - wie dies in Fig. 4 dargestellt ist - das Wassergebiet 10 nicht in Raumschichten 13, sondern in aneinanderliegende Raumzellen 30 unterteilt, die nicht nur in der z-Achse, sondern auch in der x- und y-Achse des kartesischen Koordinatensystems 11 eine endliche Abmessung aufweisen. Vorzugsweise sind die Abmessungen aller Raumzellen 30 gleich gewählt. Die vorstehend beschriebene Messung der messzellenspezifischen, relativen Fahrzeuggeschwindigkeiten wird in gleicher Weise durchgeführt und die darauf aufsetzende Bestimmung der bereichsspezifischen Strömungen erfolgt in gleicher Weise, aber bezogen auf die einzelnen Raumzellen 30, die die Bereiche des Wassergebiets 10 darstellen. Die in Zuordnung zu den Raumzellen 30 abgespeicherten Strömungswerte werden dann abhängig davon, in welche Raumzelle 30 die momentane Position des Unterwasserfahrzeugs 12 fällt, selektiv ausgelesen und in das Navigationsfilter 18 eingegeben.

Da auch in dem in Fig. 4 dargestellten Ausführungsbeispiel der Wassergebietsunterteilung sichergestellt sein muss, dass für jede Raumzelle 30, in die das Unterwasserfahrzeug 12 bei seiner Ab- oder Auftauchfahrt eindringt, bereits ein Wert für die in der Raumzelle 30 herrschende Wasserströmung vorhanden ist, sind der Ausrichtung des Dopplerlogs 14 beim Anbau an das Unterwasserfahrzeug 12 sehr viel engere Grenzen gesetzt. Bei der in Fig. 4 dargestellten Tauchfahrt (und auch beim Auftauchen) des Unterwasserfahrzeugs 12 muss die Messrichtung des Dopplerlogs 14 weitgehend in Vorausrichtung des Unterwasserfahrzeugs 12 gerichtet sein, während bei Fahrt in einer erreichten Tauchtiefe eine zur Fahrtrichtung unter einem spitzen bis rechten Winkel geneigte Messrichtung des Dopplerlogs 14 zur Messung der Fahrzeuggeschwindigkeit über Grund wünschenswert ist. Das Dopplerlog 14 muss somit entweder schwenkbar am Fahrzeugrumpf angebaut werden, oder es müssen für die Geschwindigkeitsmessungen während der Ab- und Auftauchphase einerseits und während der Missionsfahrt in einer erreichten Tauchtiefe andererseits separate Dopplerlogs vorgesehen werden.

**Patentansprüche**

1. Verfahren zur Navigation eines Unterwasserfahrzeugs (12), bei dem aus von Navigationssensoren (17) gelieferten Messdaten mittels eines die Messwerte eines Dopplerlogs (14) einbeziehenden Navigationsfilters (18) Navigationsdaten über Position, Lage und absolute Fahrzeuggeschwindigkeit des Unterwasserfahrzeugs (12) bestimmt werden, **dadurch gekennzeichnet, dass** das vom Unterwasserfahrzeug (12) befahrene Wassergebiet (10) in Bereiche unterteilt wird, die innerhalb eines kartesischen Koordinatensystems (11) mindestens in dessen vertikal ausgerichteten z-Achse eine endliche Abmessung (d) aufweisen, dass zumindest während der Ab- und/oder Auftauchphase des Unterwasserfahrzeugs (12) aus den vom Dopplerlog (14) in aufeinanderfolgenden Messvorgängen gemessenen, relativen Fahrzeuggeschwindigkeiten $(w_m^n)$ und den vom Navigationsfilter (18) fortlaufend ausgegebenen, absoluten Fahrzeuggeschwindigkeiten $(v_F(t^n))$ die Strömungen (1s) in dem Wassergebiet (10) innerhalb der einzelnen Bereiche bestimmt und gespeichert werden und dass die gespeicherten, bereichsspezifischen Strömungen $(_ls)$ abhängig von dem jeweils vom Unterwasserfahrzeug (12) momentan befahrenen Bereich in das Navigationsfilter (18) eingegeben werden.

2. Verfahren nach Anspruch 1, **dadurch gekennzeichnet, dass** der Messbereich des Dopplerlogs (14) in in Messrichtung aneinanderliegende Messzellen (16) unterteilt wird, die eine in Messrichtung gesehene, vorzugsweise gleiche Zellentiefe (a) aufweisen, dass bei jedem Messvorgang für jede Messzelle (16) die relative Fahrzeuggeschwindigkeit $(w_m^n)$ bestimmt wird und dass die messzellenspezifischen, relativen Fahrzeuggeschwindigkeiten $(w_m^n)$ in Zuordnung zu den Messvorgängen in die Bereiche des Wassergebiets (10) transformiert werden.

3. Verfahren nach Anspruch 2, **dadurch gekennzeichnet, dass** bei jedem Messvorgang in jedem Bereich des Wassergebiets (10) aus der durch die Transformation entstandenen, bereichsspezifischen Fahrzeuggeschwindigkeit $(_lw^n)$ und der vom Navigationsfilter (18) zum Zeitpunkt $(t_n)$ des Messvorgangs ausgegebenen absoluten Fahrzeuggeschwindigkeit $(v_F(t_n))$ die Strömung $(_ls^n)$ berechnet und aus den bei allen Messvorgängen für den jeweiligen Bereich berechneten Strömungen $(_ls^n)$ die bereichsspezifische Strömung $(_1s)$ abgeleitet und gespeichert wird.

4. Verfahren nach Anspruch 2 oder 3, **dadurch gekennzeichnet, dass** zur Transformation der messzellenspezifischen, relativen Fahrzeuggeschwindigkeiten $(w_m^n)$ jeweils die aus demselben Messvorgang (n) hervorgegangenen messzellenspezifischen, relativen Fahrzeuggeschwindigkeiten $(w_m^n)$ derjenigen Messzellen (16), die ein Schnittvolumen $(_1V_m^n)$ mit einunddemselben Bereich besitzen, gewichtet werden und die Summe der gewichteten relativen Fahrzeuggeschwindigkeiten durch die Summe der Wichtungen dividiert wird und dass das Transformationsergebnis als bereichsspezifische, relativen Fahrzeuggeschwindigkeit $(_1W^n)$ im jeweiligen Bereich ausgegeben wird.

5. Verfahren nach Anspruch 4, **dadurch gekennzeichnet, dass** zur Wichtung der messzellenspezifischen, relativen Fahrzeuggeschwindigkeiten $(w_m^n)$ diese jeweils mit einem Wichtungsfaktor $(_1g_m^n)$ multipliziert werden, dass der jeweilige Wichtungsfaktor $(_1g_m^n)$ als Quotient aus dem von der jeweiligen Messzelle (16) aus dem Bereich ausgeschnittenen Schnittvolumen $(_1V_m^n)$ und dem Volumen $(V_m)$ der jeweiligen Messzelle (16) berechnet wird und dass die Summe der Wichtungsfaktoren $(_1g_m^n)$ die Summe der Wichtungen darstellt.

6. Verfahren nach einem der Ansprüche 3 bis 5, **dadurch gekennzeichnet, dass** zur Ableitung der bereichsspezifischen Strömungen ($_1$s) alle für den jeweiligen Bereich bei allen Messvorgängen, einschließlich des aktuellen Messvorgangs, berechneten Strömungen ($_1$s$^n$) gemittelt werden.

7. Verfahren nach Anspruch 6, **dadurch gekennzeichnet, dass** die zuvor abgeleitete, letzte, bereichsspezifische Strömung ($_1$s (alt)) mit der um "1" reduzierten Anzahl ($_1$B$^{n-1}$) der in dem Bereich insgesamt durchgeführten Messvorgänge multipliziert, zu der bei dem jeweiligen Messvorgang berechneten Strömung ($_1$s$^n$) addiert und durch die Anzahl ($_1$B$^n$) der im Bereich insgesamt durchgeführten Messvorgänge dividiert wird.

8. Verfahren nach einem der Ansprüche 1 bis 7, **dadurch gekennzeichnet, dass** die Bereiche in Vertikalrichtung übereinanderliegende Raumschichten (13) sind, die vorzugsweise gleiche Schichtdicken (d) aufweisen.

9. Verfahren nach einem der Ansprüche 1 bis 7, **dadurch gekennzeichnet, dass** die Bereiche in x-, y- und z-Richtung des kartesischen Koordinatensystems (11) aneinanderliegende Raumzellen (30) mit vorzugsweise gleichen Abmessungen sind.

10. Verfahren nach einem der Ansprüche 1 bis 9, **dadurch gekennzeichnet, dass** jeder Messvorgang mit Aussenden eines Schallimpulses durch das Dopplerlog (14) eingeleitet wird.

11. Verfahren nach Anspruch 10, **dadurch gekennzeichnet, dass** die Anzahl ($_1$B$^n$) der in einem Bereich durchgeführten Messvorgänge aus der Zahl der ausgesendeten Schallimpulse, der Reichweite des Dopplerlogs (14) und der Lage und Position des Wasserfahrzeugs (12) berechnet wird.

12. Verfahren nach einem der Ansprüche 1 bis 11, **dadurch gekennzeichnet, dass** das Dopplerlog (14) mindestens vier Schallkeulen (15) generiert, die in unterschiedliche Richtungen zur Längs- und Querachse des Unterwasserfahrzeugs (12) um vorzugsweise gleiche Winkel geneigt sind, und dass der Messbereich quer zur Messrichtung durch die Schallkeulen (15) begrenzt ist.

## Claims

1. A method for navigating an undersea vehicle (12), in which navigation data relating to the position, attitude and absolute vehicle speed of the undersea vehicle (12) are determined from measurement data provided by navigation sensors (17) by means of a navigation filter (18) which includes the measured values from a Doppler log (14), **characterized in that** the water area (10) through which the undersea vehicle (12) travels is subdivided into regions having a finite dimension (d) at least in the vertically oriented z axis of a Cartesian coordinate system (11), **in that** the currents ($_1$s) in the water area (10) inside the individual regions are determined, at least during the submerging and/or surfacing phase of the undersea vehicle (12), from the relative vehicle speeds ($w_m^n$) measured by the Doppler log (14) in successive measuring operations and the absolute vehicle speeds ($v_F(t_n)$) continuously output by the navigation filter (18) and are stored, and **in that** the stored region-specific currents ($_1$s) are input to the navigation filter (18) on the basis of the region through which the undersea vehicle (12) is respectively instantaneously traveling.

2. The method as claimed in claim 1, **characterized in that** the measurement range of the Doppler log (14) is subdivided into measuring cells (16) which are adjacent to one another in the direction of measurement and preferably have the same cell depth (a) as seen in the direction of measurement, **in that** the relative vehicle speed ($w_m^n$) is determined for each measuring cell (16) in each measuring operation, and **in that** the measuring-cell-specific relative

   vehicle speeds ($w_m^n$) are transformed into the regions of the water area (10) in association with the measuring operations.

3. The method as claimed in claim 2, **characterized in that**, in each measuring operation in each region of the water area (10), the current ($_1$s$^n$) is calculated from the region-specific vehicle speed ($_1$w$^n$) produced by the transformation and the absolute vehicle speed ($v_F(t_n)$) output by the navigation filter (18) at the time ($t_n$) of the measuring operation, and the region-specific current ($_1$s) is derived from the currents ($_1$s$^n$) calculated for the respective region in all measuring operations and is stored.

**4.** The method as claimed in claim 2 or 3, **characterized in that**, in order to transform the measuring-cell-specific relative vehicle speeds $\left( w_m^n \right)$, the respective measuring-cell-specific relative vehicle speeds $\left( w_m^n \right)$ of those measuring cells (16) which have a sectional volume $\left( {}_1V_m^n \right)$ with the same region, said speeds emerging from the same measuring operation (n), are weighted and the sum of the weighted relative vehicle speeds is divided by the sum of the weightings, and **in that** the transformation result is output in the form of a region-specific relative vehicle speed $\left( {}_1W^n \right)$ in the respective region.

**5.** The method as claimed in claim 4, **characterized in that**, in order to weight the measuring-cell-specific relative vehicle speeds $\left( w_m^n \right)$, the latter are respectively multiplied by a weighting factor $\left( {}_1g_m^n \right)$, **in that** the respective weighting factor $\left( {}_1g_m^n \right)$ is calculated as the quotient of the sectional volume $\left( {}_1V_m^n \right)$ cut from the region by the respective measuring cell (16) and the volume $(V_m)$ of the respective measuring cell (16), and **in that** the sum of the weighting factors $\left( {}_1g_m^n \right)$ represents the sum of the weightings.

**6.** The method as claimed in one of claims 3 to 5, **characterized in that**, in order to derive the region-specific currents $({}_ls)$, all currents $({}_ls^n)$ calculated for the respective region in all measuring operations, including the instantaneous measuring operation, are averaged.

**7.** The method as claimed in claim 6, **characterized in that** the previously derived last region-specific current $({}_ls(alt))$ is multiplied by the total number $({}_lB^{n-1})$ of measuring operations carried out in the region, said number being reduced by "1", is added to the current $({}_1s^n)$ calculated in the respective measuring operation and is divided by the total number $({}_lB^n)$ of measuring operations carried out in the region.

**8.** The method as claimed in one of claims 1 to 7, **characterized in that** the regions are space layers (13) which are above one another in the vertical direction and preferably have the same layer thicknesses (d).

**9.** The method as claimed in one of claims 1 to 7, **characterized in that** the regions are space cells (30) which are adjacent to one another in the x, y and z directions of the Cartesian coordinate system (11) and preferably have the same dimensions.

**10.** The method as claimed in one of claims 1 to 9, **characterized in that** each measuring operation is initiated by the Doppler log (14) emitting a sound pulse.

**11.** The method as claimed in claim 10, **characterized in that** the number $({}_lB^n)$ of measuring operations carried out in a region is calculated from the number of emitted sound pulses, the range of the Doppler log (14) and the attitude and position of the watercraft (12).

**12.** The method as claimed in one of claims 1 to 11, **characterized in that** the Doppler log (14) generates at least four sound cones (15) which are preferably inclined by the same angles in different directions with respect to the longitudinal and transverse axes of the undersea vehicle (12), and **in that** the measurement range is delimited by the sound cones (15) transversely with respect to the direction of measurement.

**Revendications**

**1.** Procédé pour la navigation d'un véhicule sous-marin (12), selon lequel des données de navigation sur la position, la situation et la vitesse absolue du véhicule sous-marin (12) sont déterminées à partir de données de mesure délivrées par des capteurs de navigation (17) au moyen d'un filtre de navigation (18) faisant intervenir les valeurs mesurées d'un loch doppler (14), **caractérisé en ce que** la région aquatique (10) dans laquelle circule le véhicule sous-marin (12) est divisée en zones qui, au sein d'un système de coordonnées (11) cartésien, présentent une dimension finie (d) au moins dans son axe Z orienté verticalement, **en ce que** les courants $({}_ls)$ dans la région aquatique (10) à l'intérieur des zones individuelles sont déterminés au moins pendant la phase d'immersion et/ou de retour en surface du véhicule sous-marin (12) à partir des vitesses relatives du véhicule $(w^n_m)$ mesurées par le loch doppler (14) dans des opérations de mesure successives et des vitesses absolues du véhicule $(v_F(t_n))$ délivrées

constamment par le filtre de navigation (18), puis mémorisés, et **en ce que** les courants ($_lS$) mémorisés spécifiquement aux zones sont introduits dans le filtre de navigation (18) en fonction de la zone qui est à chaque fois momentanément traversée par le véhicule sous-marin (12).

**2.** Procédé selon la revendication 1, **caractérisé en ce que** la plage de mesure du loch doppler (14) est divisée en cellules de mesure (16) juxtaposées dans la direction de la mesure, lesquelles présentent une profondeur de cellule (a) de préférence identique, vue dans la direction de la mesure, **en ce qu'**à chaque opération de mesure, la vitesse relative du véhicule ($w^n_m$) est mesurée pour chaque cellule de mesure (16) et **en ce que** les vitesses relatives du véhicule ($w^n_m$) spécifiques aux cellules de mesure sont transformées en association avec les opérations de mesure dans les zones de la région aquatique (10).

**3.** Procédé selon la revendication 2, **caractérisé en ce qu'**à chaque opération de mesure, dans chaque zone de la région aquatique (10), le courant ($_1s^n$) est calculé à partir de la vitesse du véhicule ($_1w^n$) spécifique à la zone obtenue par la transformation et de la vitesse absolue du véhicule ($v_F(t_n)$) délivrée par le filtre de navigation (18) au moment ($t_n$) de l'opération de mesure et le courant ($_1s$) spécifique à la zone est dérivé des courants ($_1s^n$) calculés pour la zone respective lors de toutes les opérations de mesure, puis mémorisé.

**4.** Procédé selon la revendication 2 ou 3, **caractérisé en ce que** pour la transformation des vitesses relatives du véhicule ($w^n_m$) spécifiques aux cellules de mesure, les vitesses relatives du véhicule ($w^n_m$) spécifiques aux cellules de mesure résultant de la même opération de mesure (n) des cellules de mesure (16) qui possèdent un volume de coupe ($_1V^n_m$) avec une seule et même zone sont à chaque fois pondérées et la somme des vitesses relatives du véhicule pondérées est divisée par la somme des poids et **en ce que** le résultat de la transformation est délivré sous la forme d'une vitesse relative du véhicule ($_1W^n$) spécifique à la zone dans la zone correspondante.

**5.** Procédé selon la revendication 4, **caractérisé en ce que** pour la pondération des vitesses relatives du véhicule ($w^n_m$) spécifiques aux cellules de mesure, celles-ci sont à chaque fois multipliées par un facteur de pondération ($_lg^n_m$) **en ce que** le facteur de pondération ($_lg^n_m$) correspondant est calculé sous la forme du quotient du volume de coupe ($_lV^n_m$) découpé de la zone de la cellule de mesure (16) correspondante par le volume ($V_m$) de la cellule de mesure (16) correspondante et **en ce que** la somme des facteurs de pondération ($_lg^n_m$) représente la somme des pondérations.

**6.** Procédé selon l'une des revendications 3 à 5, **caractérisé en ce que** la dérivation des courants ($_ls$) spécifiques à la zone s'effectue en calculant la moyenne de tous les courants ($_ls^n$) calculés pour la zone correspondante lors de toutes les opérations de mesure, y compris l'opération de mesure en cours.

**7.** Procédé selon la revendication 6, **caractérisé en ce que** le dernier courant spécifique à la zone, dérivé précédemment, ($_ls(alt)$) est multiplié par le nombre réduit de « 1 » ($_1B^{n-1}$) d'opérations de mesure effectuées au total dans la zone, additionné au courant ($_ls^n$) calculé lors de l'opération de mesure correspondante et divisé par le nombre ($_1B^n$) d'opérations de mesure effectuées au total dans la zone.

**8.** Procédé selon l'une des revendications 1 à 7, **caractérisé en ce que** les zones sont des couches d'espace (13) superposées dans le sens vertical et qui présentent de préférence les mêmes épaisseurs de couche (d).

**9.** Procédé selon l'une des revendications 1 à 7, **caractérisé en ce que** les zones, dans la direction x, y et z du système de coordonnées (11) cartésien, sont des cellules d'espace (30) juxtaposées ayant de préférence les mêmes dimensions.

**10.** Procédé selon l'une des revendications 1 à 9, **caractérisé en ce que** chaque opération de mesure est initiée par l'envoi d'une impulsion sonore par le loch doppler (14).

**11.** Procédé selon la revendication 10, **caractérisé en ce que** le nombre ($_1B^n$) d'opérations de mesure effectuées dans une zone est calculé à partir du nombre d'impulsions sonores émises, de la portée du loch doppler (14) et de la situation et la position du véhicule sous-marin (12).

**12.** Procédé selon l'une des revendications 1 à 11, **caractérisé en ce que** le loch doppler (14) génère au moins quatre lobes sonores (15) qui sont inclinés dans des directions différentes par rapport à l'axe longitudinal et transversal du véhicule sous-marin (12), de préférence selon le même angle, et **en ce que** la plage de mesure transversale par rapport à la direction de mesure est délimitée par les lobes sonores (15).

Fig. 1

Fig. 2

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 2901293

**In der Beschreibung aufgeführte Nicht-Patentliteratur**

• strapdown inertial navigation technology. **TITTER-TON, T. H. ; WESTON, J. L.** Peter Peregrinus, London. 1997
• **N. VASQUEZ ; M. J. RENDAS.** Using a priori Current Knowlege on AUV-Navigation. *IEEE 1998,0-7803-5045-6/98,* 1998
• **VON TAMAKI URA et al.** On-site INS Update of an AUV r2D4 by SSBL based Position Estimation. *OCEANS 04. MTTS/IEEE Technoocean '04 Kobe, Japan,* 09. November 2004, ISBN 978-0-7803-8669-3, 1606-1611